# EUROPEAN PATENT SPECIFICATION

(11) **EP 2 786 913 B1**
(45) Date of publication and mention of the grant of the patent: **26.08.2020**
(21) Application number: 13162406.6
(22) Date of filing: 04.04.2013
(51) Int. Cl.: B61L 7/08, B61L 19/14, G05B 9/03

(54) **Switch point machine management unit**
Schaltpunkt-Maschinenverwaltungseinheit
Unité de gestion de machine de point de commutation

(43) Date of publication of application: 08.10.2014
(73) Proprietor: ALSTOM Transport Technologies, 93400 Saint-Ouen (FR)
(72) Inventor: Bachetti, Vittorio, I-40026 Imola (BO) (IT); Motta, Sara, I-40050 Monte San Pietro (BO) (IT)
(74) Representative: Karaghiosoff, Giorgio Alessandro

(56) References cited:
- EP-A1- 1 785 332
- GB-A- 2 348 034
- US-A1- 2012 173 054

## Description

The invention relates to a switch point machine management unit comprising
a control and command logical unit executing a control and command software;
the said control and command logical unit having two processing channels, each one of the said channels is provided with an independent central processing unit and each one of the said processing channels execute independently from the other and in parallel to the other the control and command logic program and generates independently from the other command signals to drive the switch point machine for displacing the points from the normal to the reversal position or viceversa;
a position control module of the switch point machine is further provided for generating switch point machine status signals at least relatively to the starting position of the points and
a signal comparing unit generating an activation signal as a result of the comparison between command signals and status signals for enabling the driving of the switch point according to the command signals depending on the result of the said comparison.

Control systems for safety applications are well known in the art. Also control systems operating in a fail safe way by means of a 2oo2 architecture, this means by doubling the hardware executing the command and control program and verifying the congruency of the results of the process executed independently and in parallel by the two processing channels. If the congruency test is positive, then the command is executed if not, the command is not executed and the system is set in a non permissive state by vitally enabling its functions.

Document US5274554 discloses a data processing system in which a microcomputer is provided for each processing channel. The system is constructed according to safety principles. The information to be output to the process are determined by both microcomputers and are supplied in pairs to two non-fail-safe comparators which drive respective AND gates. Each of the AND gates drives a respective amplifier. The power supply of one amplifier occurs from a battery or the like and the power supply of the other amplifier occurs by transformer-coupled output signals of the first amplifier, which signals are then rectified. The information required for the process are coupled via at least one further amplifier whose power supply is provided by a transformer-coupled and rectified output signal of the second amplifier. Given a signal discrepancy between the two microcomputers, information is not permitted to the process which could lead to a dangerous situation.

Document US5274554:discloses a control system comprising a dual actuator (2) and primary and secondary controllers (20, 22), each of which has two control channels. In a normal mode of operation, the primary controller (20) controls both valves (32, 38) of the actuator (2). Each primary channel generates a model signal and a monitoring signal corresponding to expected and actual operation of the actuator, respectively. The two signals from each channel are communicated to the other channel. Each channel monitors itself as well as the other channel by comparing model and monitoring signals; and is also similarly redundantly monitored by the other channel of the controller (20). Each channel independently compares its own signals with the signals from the other channel. Each of the two channels has a deactivating switch responsive to a fault status signal from either of the two channels to thereby allow deactivation of a failed channel even when the failure in such channel prevents it from deactivating itself. The channels of the secondary controller (22) are similarly redundantly monitored by themselves and each other. Communication links are maintained between the primary channels, the secondary channels, and between the primary and secondary channels.

Document US5794167 discloses a microprocessor based safety system applicable, in particular, to the field of rail transport, for monitoring and controlling actuators (ACT) as a function of the data supplied by sensors (CP). The safety system includes at least two microprocessors (PI, P2) in parallel handling the same application, the inputs of which receive the pre-encoded data (DE) from the sensors (CP), and the output data of which is read back in safety for comparison with the input data, and a third, comparison microprocessor (P3) known as a voter, for comparing, using software and in safety, the encoded characteristic results (R1, R2) of the two application microprocessors (PI, P2) and operating in consequence a dynamic controller (CD) authorizing the transmission of the output data (DS) to the actuators (ACT).

The known safety systems are limited by the fact that they are not adaptable to different kind of hardware of the control modules of the switch point machines and to different kinds of interlocking systems generating the command signals for driving the switch pint machine. In particular the known safety systems are nit able to allow the management of more than one switch point machine in a fail safe way and specifically they are not able to manage a three or six wire interface of the control module of the switch point machine to the management unit.

Document EP1785332 A1 discloses an actuating and monitoring module for operation unit e.g. wayside equipment of railway system.

The aim of the invention is to overcome the problems of adaptation of the voting stage of a fail safe switch point machine driver to different kinds of hardware of the control modules of the switch point machines and to different kinds of interlocking systems generating the command signals for driving the switch point machine. The invention is defined in the claims.

The invention achieves the above mentioned aims with a switch point machine management unit comprising
a control and command logical unit executing a control and command software;
the said control and command logical unit having two processing channels, each one of the said channels is provided with an independent central processing unit and each one of the said processing channels execute independently from the other and in parallel to the other the control and command logic program and generates independently from the other command signals to drive the switch point machine for displacing the points from the normal to the reversal position or viceversa;
a position control unit of the switch point machine is further provided for generating switch point machine status signals at least relatively to the starting position of the points and
a signal comparing unit generating an activation signal as a result of the comparison between command signals and status signals for enabling the driving of the switch point according to the command signals depending on the result of the said comparison and in which the signal comparing unit of the command signals with the status signals of the switch point machine consists in two independent further processing units each one communicating with respectively only one of the processing channels of the control and command logical unit, and each one carrying out in parallel and independently from the other the said comparison between command signals and status signals, the output of each of the said two further processing units being fed to the voter unit for generation of an activation signal.

From the above it is immediately clear that the present switch point machine managing unit has four microprocessors, while the systems disclosed in the above mentioned documents show only a generic 2oo2 architecture with two microprocessor carrying out in parallel the same safety program.. In US5794167 a third microprocessor is equivalent to the voter and the signals generated are not fed to a vital AND enabling the driving of the switch machine. No feedback of the voter through the vital AND output is sent to the command and control logic unit for certifying the correctness of the processing step.

The managing unit according to the present invention has two further CPU units (PcA, PcB) which are specifically dedicated to elaboration of the status signals of the point machine and not having any role in computing the command signals according to the control logic of the interlocking system and is thus faster than the known systems. As it will appear clearly in the following description by surveying through a voter and a vital AND the outputs of the command and control unit which generates the command signals and the status signals the level of inherently fail safe operation is ensured at an higher degree without the need of a four channel system as in US5274554. The voting step takes place on the outputs of the two processors (PcA and PcB) carrying out the point status validation and the vital AND has a double safety since the command signals generated by the two channels of the first command and control unit and the output signal of the voter has to be present in order to trigger the activation of the switch machine.

The two further processors of the status control managing units help in being able to integrate the vital voting with 2oo2 architecture to any kind of interlocking architecture, having any kind of specific MSTEP unit for generating command signals to derive the switch point machine

According to a further feature, a feedback line is provided for the voter signal through the vital AND output to the command and control logic unit for certifying the correctness of the processing step.

The fail safe vital function is carried out by a vital AND unit, the said vital AND unit having three inputs one of which is connected to the output of the voter and the other two are connected each one to respectively one of the processing channels of the control and command logical unit, the said vital AND generating a switch machine driving signal only when the command and control signals generated independently by each one the two processing channels of the control and command logical unit and the activation signal generated by the Voter are present at the same time at the inputs of the said vital AND unit.

According to still a further feature, the control position unit of the switch points comprises a control switch for opening/closing a normal position control line of the points and a control switch for opening/closing a reverse position control line of the points, each control line being provided with a dedicated diode which is connected in series to the respective control line and a dedicated band pass filter in series with the diode,
a status control signal being generated by the switch point management unit having a different frequency dedicated only for respectively one of the two control lines for the normal and the reverse status of the switch point machine and being fed to the;
each of the two band pass filter and of the diodes respectively on the normal and the reverse control lines being tuned with the frequency of the corresponding status control signal

And the diode being inserted in the control position process when the frequency of the control signals is tuned with the frequency band of the band pass filter the diode carrying out a signal modulation of the status control signal.

Thanks to the diode as a component for modulating a control signal in parallel with a band pass filter tuned to a certain specific frequency of the control signal it is possible to operate with control signals of different frequency for the different status indications (Normal N or Reverse R) of a switch machine as well as on more than one switch machine. Furthermore a higher facility to be integrated with existing hardware is provided, and higher degree of safety either from the point of view of the control signal elaboration and from the point of view of the use of an inherent fail safe 2002 voting system and process.

A non limitative embodiment of the present invention and the resulting advantages is described in the following with the help of the annexed drawings in which:

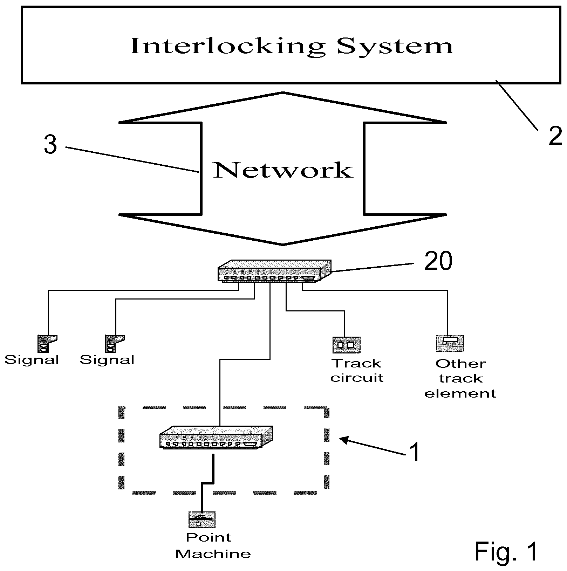

Fig. 1 is a block diagram showing the operational context of the switch point machine management system according to the present invention.
Fig. 2 to 4 shows simplified block diagrams describing three different possible interfaces of the switch point machine management unit.
Fig. 5 shows a simplified block diagram of the switch point machine management unit according to the present invention.
Fig. 6 shows a simplified block diagram of the AC/DC power supply signal generation stage for driving the switch point machine.
Fig. 7 and 8 are block diagrams showing the of the control position stage respectively in the normal position detection and in the reverse position detection.
Fig. 9 is a functional diagram describing the control signal generation process executed by the switch point machine management unit.
Fig. 10 is a functional diagram describing the Field signal acquisition process executed by the switch point machine management unit.
Figure 11 is a block diagram which illustrates with more detail the file signal acquisition chain. Fig. 12 is a simplified block diagram showing the feedback line between the Vital AND and the control and command logic processing unit for governing the commands enablement.

The point machine management system according to the present invention has three main functions:
- A switch point machine activation function for displacing the points from a starting position (normal or reverse) to a end position (respectively reverse or normal).
- A switch point machine position detection (control of the position status of the points)
- A .self and switch point machine diagnostic.

The point machine management system actuates the point machine movement and checks its status providing to the point machine a control signal whose behavior change depending to the point machine contacts status.

This is done in combination with a Control position module CPM which is in charge to differentiate Normal and Reversal control signal behavior and assure control cable short-circuits or inversion detection by point machine management system in combination with the electric control contacts on the switch point machine which have different commutation status univocally correlated to the end positions of the points in the normal or in the reverse position and to a loose of control when the points do not reach any of the two end positions.

The switch point machine management unit 1 is a command and control logical processing unit which communicates on one side with the interlocking system 2 through a local input output management station 20 which manages the driving of other yard devices such as light signals, track circuits, axle counters and other track side operative units and a communication network 3.

On the other side the switch point machine management unit 1 communicates with the switch point machine for driving it and carrying out a control status check of the switch point machine and diagnostic autotests. The interlocking system generates movement commands of the points for commuting the position of the points from normal to reverse or vice versa. These movement commands are received by the switch point management unit 1 and transformed in driving signals for displacing the points from a starting position to an end position. These transformation is carried out in fail safe, vital way.

The switch point management unit communicates with the switch point machine by means of a track side interface which can be of different kinds:
3-wires interface, 6-wires interface and in-communication interface.

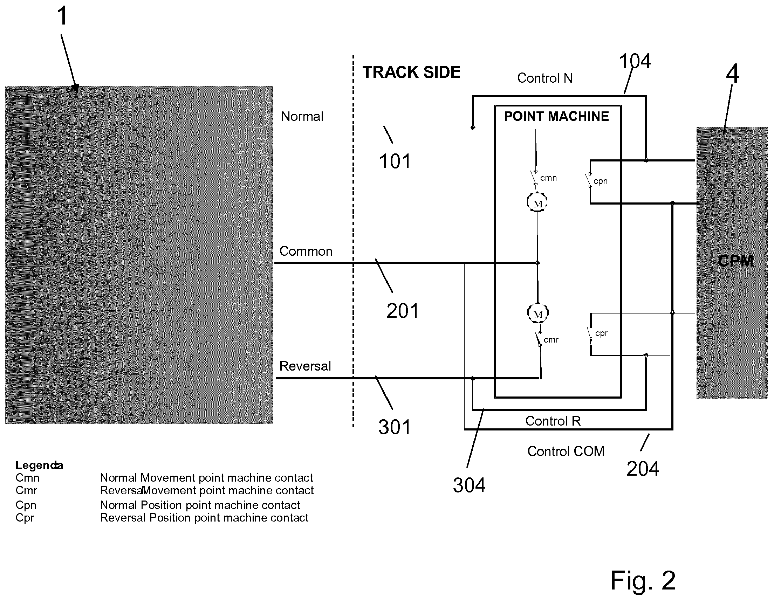

In figure 2, a 3-wire track interface is schematically shown. The switch point management unit is interfaced to the point machine through three command wires indicated by Normal 101, Common 201, and Reversal 301. These wires provide either the energy to activate the point machine, either the control signal to detect the point machine position status. The control position module 4 (CPM) is interfaced directly to the point machine through the three control wires indicated by control N 104, control COM 204 and control R 304. The connection between command wires and control wires is realized in a point machine terminal box not shown in detail.

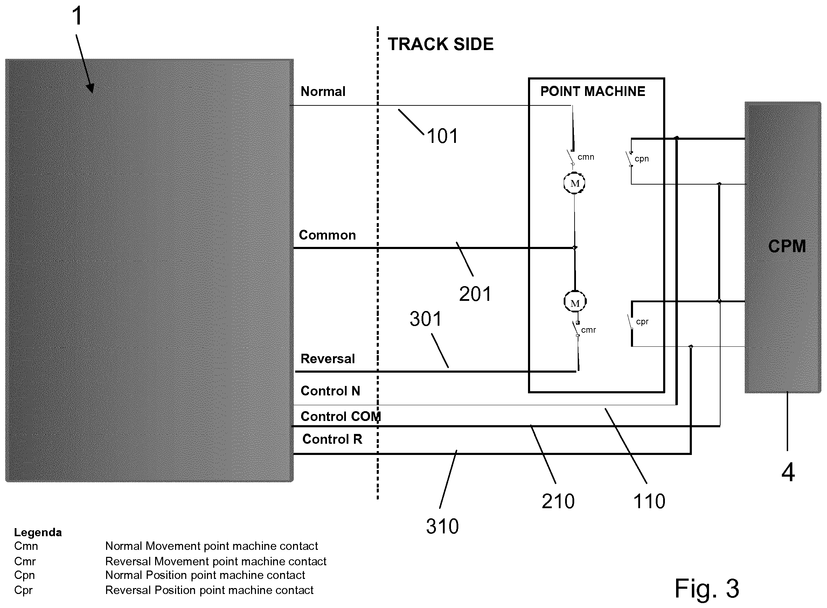

In figure 3 a six-wires interface is shown providing separated command and control cables.

The switch point machine management unit is interfaced to the point machine through three command wires that provide the energy and which are indicated by Normal 101, Common 201, and Reversal 301 and three control wires that provide the control signal to detect the point machine position status and which are indicated by control N 110, control COM 210 and control R 310. The control position module 4 is interfaced directly to the point machine and connected to the three control wires 110, 201, 310 in a point machine terminal box not shown in detail.

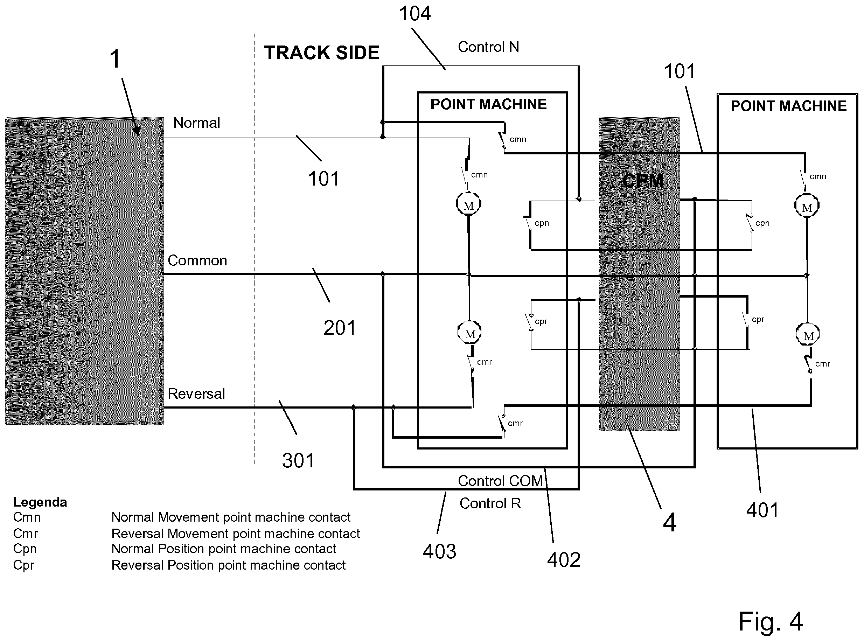

The in-communication interface, shown in Figure 4, provides two point machines interfaced to one Switch point machine management system.

In this configuration each switch point machine management unit is interfaced to two point machines through three command wires indicated by Normal 101, Common 201 and Reversal 301. These wires provide either the energy to activate the two point machines, either the control signal to detect the point machines position status. The control position module 4 is interfaced directly to the point machines through the three control wires indicated by Control N 401, Control COM 402 and Control R 403. The connection between command wires and control wires is realized in a point machine terminal box not shown in detail. In this configuration the energy to the second point machine is provided at the end of the movement of the first point machine.

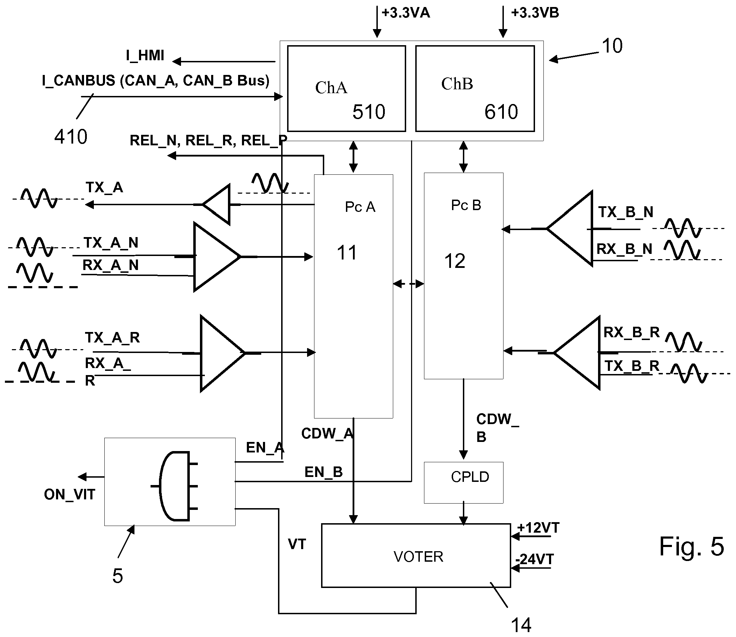

Figure 5 shows a block diagram of a switch point machine management unit 1 according to the present invention. In the embodiment illustrated in figure 5, the switch point machine management unit comprises a control and command logical processing unit 10 which carries out a control and command program. The control and command logical processing unit 10 communicates by a bus line 410 with the interlocking system and generates a switch point enabling signal when a command to commutate the status of the switch point machine is received from the interlocking system.

According to a first feature which is already known in the prior art the control and command logical processing unit 10 has a so called 2oo2 architecture. This means that the processing unit 10 two processing channels ChA 510 and ChB 610 each one having an independent CPU (not shown in detail). Each processing channel ChA and ChB processes independently from the other and in parallel with the other the point movement command received from the interlocking and generates each one a command signal EN_A and EN_B for enabling the driving of the switch point machine.

Each processing channel ChA 510 and ChB 610 communicates further respectively with only one of two parallel and independent switch machine status control managing units which are each one a processing unit PcA and PcB and are indicated by 11 and 12. This processing units operate in parallel and independently one from the other for detecting the status signals of the switch point machine and comparing the detected status signals with command signals generated by the control and command logical processing unit 10. This comparison has the aim of determining if there is a coherence of the command signals EN_A and EN_B to be sent to the switch point machine for displacing the points and changing their position, i.e. for determining if the starting position of the points from which the points has to be displaced is coherent with the displacement to which the points will be subjected according to the command signals.

Each switch machine status control managing unit 11 and 12 communicates with a voter unit 14 and transmits to the corresponding input of the voter unit 14 the result of the comparison between command signals and status signal of the switch point machine which will be described in greater detail in the following. The voter unit 14 generates an activation signal when the results of the processing carried out by the two switch machine status control managing units 11, 12 leads to the same results of the comparison.

The driving of the switch point machine is allowed only when a vital AND 5 is fed at the same time with the command signals EN_A and EN_B generated by the two processing channels ChA 510 and ChB 610 of the command and control logical processing unit 10 and with the activation signals generated by the voter unit 14. Only in this case the vital AND 5 enables the transmission to the switch point machine of the power supply signal of the switch point machine.

According to the present example the power supply signal of the switch point machine is generated by an AC/DC power stage and fed to the switch point machine for driving a motor.

In case of an unsafe failure, leading to absence of one of the two command signals EN_A, EN_B or to the deactivation of the voter 14, the vital AND 5 will not generated the signal enabling the AC/DC power stage to transmit the power supply signals to the switch point machine.

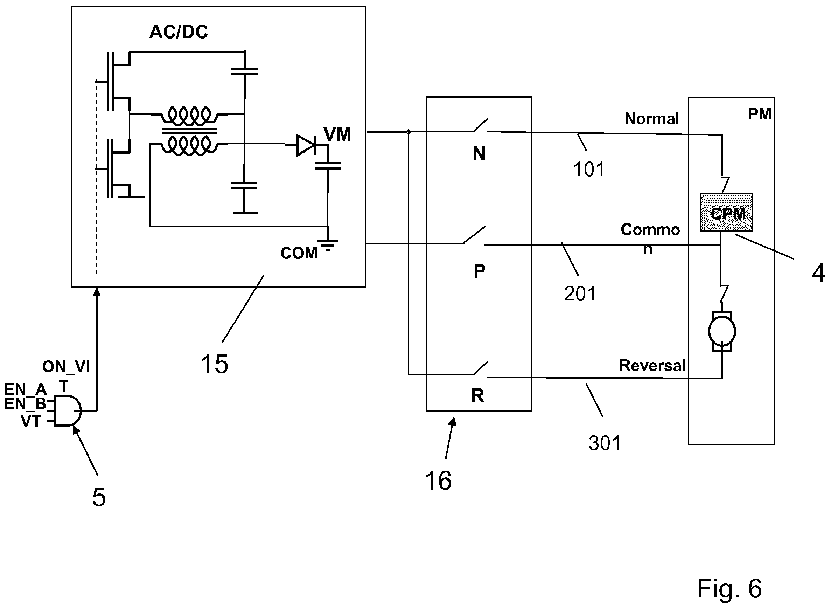

Figure 6 shows a simplified block diagram of the AC/DC power supply signal generation stage. The power supply signal VM is generated only if the power supply signal generator 15 is activated by the driving signal of the vital AND unit 5. The driving signal ON_VIT is a power supply signal generated by the vital AND 5 that enables safely the AC/DC stage which generates the power supply signal VM of the switch point machine. The power supply energy is then directed to Normal or Reversal output by the N or R relays. The output of the power supply signal is provided with three relays N, R and P which are indicated by a common box 16. The three relais N, R and P are switched by one of the two processing channels ChA 510 or ChB 610 of the switch machine command and control processing unit 10. When deactivated the relays assure to cut Normal, Reversal and Common outputs (double break).

In order to be able to acquire status position signals, the system comprises a position control module CPM cooperating with position revealing contacts on the switch point machine which are present and which are switched to closed or open status depending on the position (normal or reverse) that the points have reached or are in.

The status control is executed by transmitting a status control signal which is different for detecting the normal and the reverse position of the points and which signal is modified according to a predetermined law by the control position module only if a certain normal or reverse position status of the pints has correctly been reached determining the correct commutation condition of the control contacts of the switch machine.

The signals for normal reverse position detection are modulated signals according to a different modulation law for the normal position detection control signal and for the reverse position detection control signal. The control position module carry out a signal conditioning which determines a signal modification and the switch point status control managing units carry out a demodulation of the conditioned control signal by the control position module.

According to a preferred embodiment of the present invention the management of the status control of the switch point machine is executed by the switch point machine status control managing units in combination with the control position module, and the command and control logical processing unit 10 does not participate to this function except for sending a command to the Switch point status control managing unit PcA indicating the frequency and the time period of the modulation of the control signal to be transmitted to the switch point machine and its period and also except for driving the relais N, R and P in order to carry out a normal or a reverse point displacement.

The control position detection of the points is composed of three phases: control position generation, field signal acquisition and control position validation.

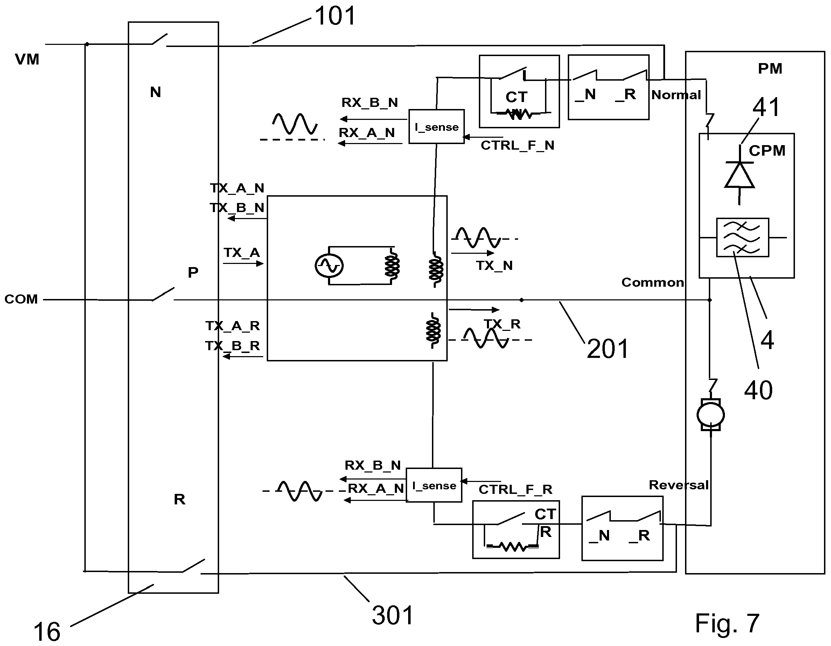

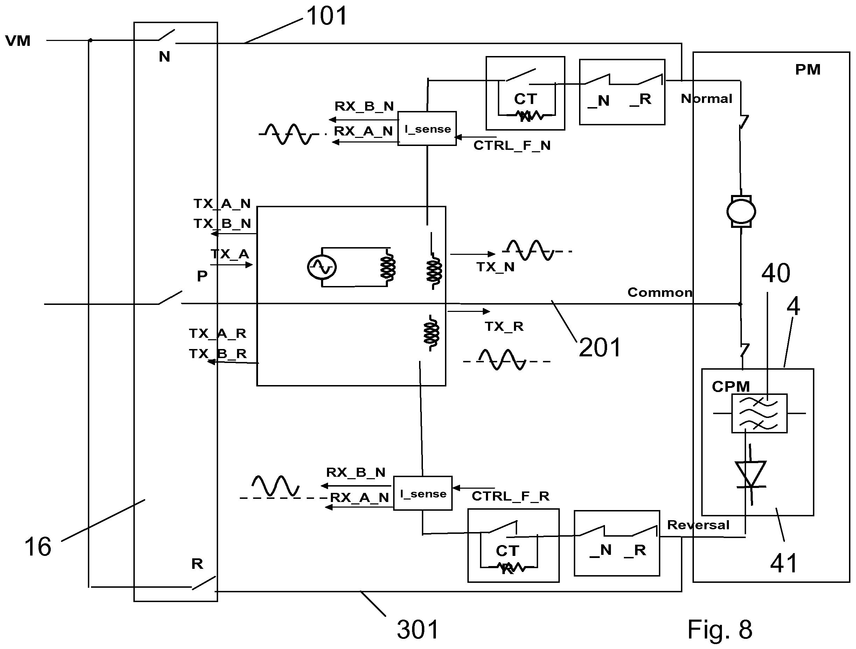

Referring to figures 7 to 10, the functions are described in greater detail with reference of a preferred embodiment of the hardware structure and of the process for control position detection of the switch point.

In order to be able to detect the switch point machine position the relays CTN or CTR are activated according to the side that is under monitoring.

The command and control logical unit 10 defines two different frequency modulation laws for Normal or Reversal position detection. It sends information to one of the two status control managing units which in the present example is the unit PcA indicated by reference number 11. This unit 11 generates a control signal (TX_A) which is transmitted to the field input of the switch machine

The modulation law for Normal position detection is a sort of FSK. TX_A is a sine wave with frequency that switches every certain time from a certain lower frequency f_1 to a certain higher frequency f_2 (for example f_1=380Hz to f_2=420Hz the switching occurs every 200ms).

Similarly the modulation law for Reversal position detection switches every certain time the frequency from a certain lower frequency f_3 to a certain higher frequency f_4. f_3 and f_4 are different from f_1 and f_2 and in the case of the numeric example given above typically f_3=570Hz to f_4=630Hz" and the time period is 200ms.

The control signal TX_A is amplified and transmitted preferably opto-isolated to the Normal and Reversal field outputs and cables indicated by (TX_N, TX_R).

The control signal is transmitted as a zero mean value signal to the said field outputs normal and reversal TX_N, TX_R.

In normal position the signal transmitted is positively rectified on normal output through the control position module 4. (signal CTRL_F_N) and acquired by the two status control managing units 11, 12.

A filter band pass is provided inside the control position module 4 (CPM) and in series to the Normal switch point machine contact. The filter band pass is centered to the mean frequency of f_1 and f_2 (according to the above mentioned values the filter band pass is centered at 400Hz), and inserts a diode in the circuit that acts as a rectifier of the transmitted signal TX_N. The diode is inserted in the circuit only if the transmitted control signal TX_N frequency is compatible with the band of the filter band pass. The presence of the diode in the control circuit provides a signal positive rectified (CTRL_F_N) which is acquired by each of the two status control managing units 11 and 12 as indicated by RX_A_N, RX_B_N through a respective current sensor. On the Reversal side the absence of the correspondent filter (Motor side) provides a control signal (CTRL_F_R) with zero mean value.

Each channel, periodically checks the transmitted signal and the acquisition chain.

Similarly when the point is in reversal position, the command and control logical unit 10 channel A ChA activates CTR relay and generates a positive sine wave signal at f_R frequency that is transmitted as a zero mean value signal to the field output Normal and Reversal. The filter band pass inside the control position module CPM being connected in series to the Reversal switch point machine contact. The filter band pass is centered to the mean value of f_3 and f_4. According to the above exemplary values of f_3 and f_4 the filter band pass is centered at 600Hz. The filter band pass inserts the diode that acts as a rectifier of the transmitted signal (CTRL_F_R). The Reversal signal received is positive rectified and acquired by the two channels (RX_A_R, RX_B_R).

The signals transmitted TX_N and TX_R are acquired by the two processing channels i.e. the two status control managing units 11 and 12 to be checked as indicated by signals TX_A_N, TX_B_N, TX_A_R, TX_B_R.

The check of the consistency between the frequency of RX_A_N and RX_B_N in Normal position or RX_A_R and RX_B_R in Reversal position and f1 starts the second cycle after the transmission due to dynamic response of the control circuit.

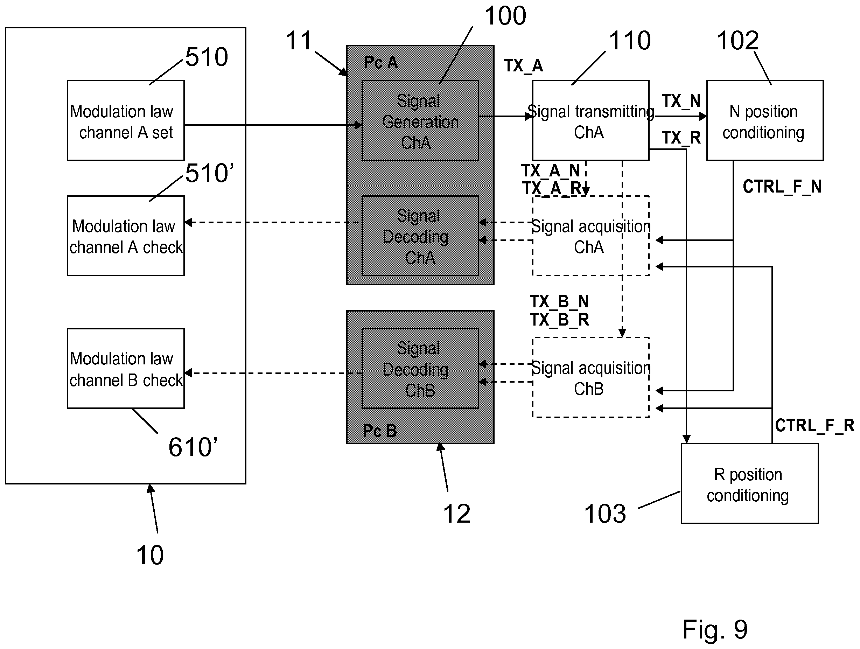

Figure 9 is a functional diagram describing the control signal generation process executed by the switch point machine management unit. The signal generation and transmission process is highlighted by the boxes and the arrows drawn with continuous lines.

Box 10 indicates the command and control logical processing unit. Boxes 510 and 510' illustrates the processing channel A function related to the setting of the modulation law of the control signal to be generated and transmitted to the point machine and to the checking of the modulation law from the signals received from the point machine.

Similarly 610' indicates the same function of checking the modulation law but carried out by the processing channel B. The generation and transmission of the status control signal TX_A to be transmitted through the field output to the point machine is carried out by the switch point status control managing unit 11 (PcA) as indicated by box 100. Signal TX_A generate signals TX_N and TX_R which are transmitted 110 to the control position module 4 which carry out the N position or R position conditioning (boxes 102, 103) of the signal according to the above description. Signal Tx_A_N, TX_A_R respectively relating to the cases of control of normal or reverse position status, are fed back to the two processing channels 510 and 610 through the two status control managing units 11 and 12.

The field signal acquisition process is executed according to the following steps:
In Normal position each channel acquires the field control signals CTRL_F_N. The status control managing units 11, 12 (PcA and PcB) extract respectively from RX_A_N, or RX_B_N, certain informations as for example the following data:
Number of samples acquired in the period detected (sample rate 40Khz);
Sum of positive values acquired in the period detected;
Sum of negative values in the period detected;
Sum of the square values divided by two in the period detected.

These information permit the evaluation by the status control managing units 11 and 12 of the RX_A_N, or RX_B_N Mean Value and the Root Mean Square Value for each period detected

These measures are stored in the internal registers and acquired every cycle (50ms) by the control and command logical unit 10.

There are two set of registers and each cycle one register is available for acquisition and the other one is used to store the measures. The status control managing units 11 and 12 swap the registers every cycle.

Similarly in Reversal position PcA and PcB acquire the field control signal CTRL_F_R.

The number of measures depends on the signal frequency and more generally on the signal behavior. In particular in absence of signal, no measure is generated.

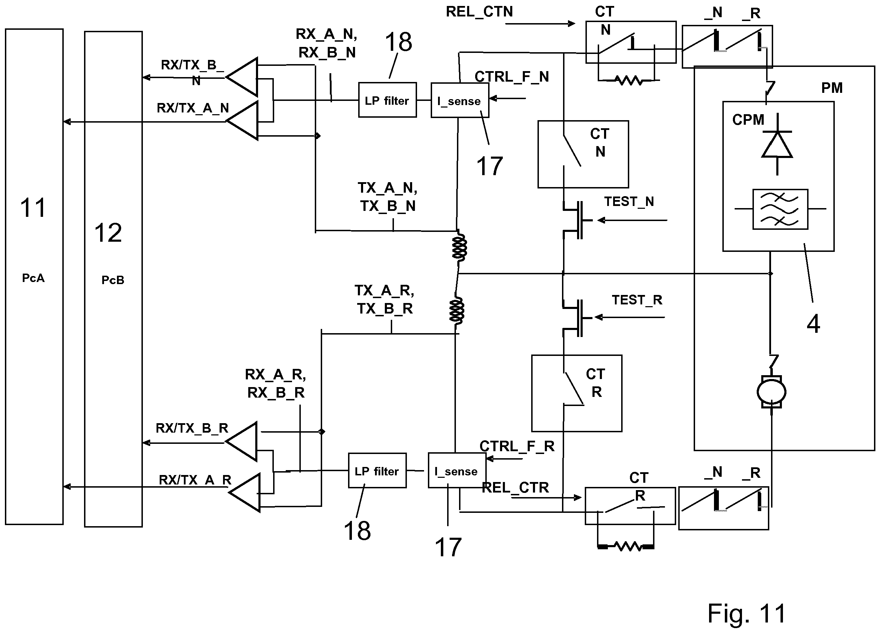

According to figure 11, the acquisition of the signals CTRL_F_N and CTRL_F_R is carried out by the two status control managing units 11 and 12 trough a current sensor 17. The current measurements are limited by a low pass band filter 18 for N acquisitions an one for R acqusitions RX_A_N, RX_A_R.

The signal is further submitted to A/D conversion generating the digital measurement signals RX/TX_A_N and RX/TX_A_R which are congruent to the analog signals RX_A_N, RX_A_R and TX_A_N, TX_A_R.

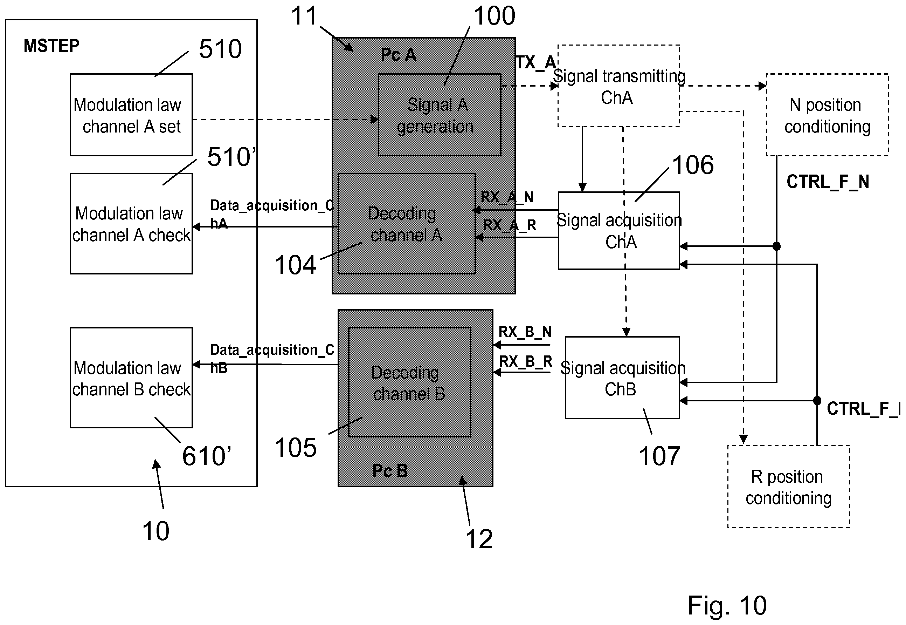

Similarly to figure 9, figure 10 illustrates the signal acquisition processing steps.

Here again the boxes and arrows in continuous lines are the functional steps and the related devices which take part to the process.

The conditioned control signals CTRL_F_N and CTRL_F_R by the control position module at steps 102, 103 are fed together with the corresponding transmitted signals TX_A_N and TX_A_R to the processing channel A and processing channel B 510, 610 of the command and control logical unit 10. The signals are first acquired by the status control managing units 11 and 12 as highlighted by box 104, 105, 106 and 107. The signals RX_A_N, RX_A_R and RX_B_N, RX_A_N and TX_A_N TX_A_R, TX_B_N and TX_B_R are submitted to decoding and validation 106, 107 by the status control managing units 11 and 12 and the related data is acquired by the processing channels A and B for the check 510' and 610' of the consistency of the modulation law on the signals TX_A_N TX_A_R, TX_B_N and TX_B_R.

The control position validation step is carried out in the following manner:
The two processing channels 510, 610 of the control and command logic unit 10 checks, every cycle (50ms), that for each acquisition stored in the control status managing units 11 and 12 (PcA and in PcB) certain signal parameters conditions are valid such as for example the frequency is equal to f1 or f2 in Normal position or the frequency is equal to f3 or f4 in Reversal position), the mean value of the signal voltage, the RMS value of the signal voltage.

Validation is achieved depending on the results of the checks and if validation is obtained the process is enabled.

The following table summarizes the above described steps:

| **Function Group** | **Description** |
|---|---|
| Command Functions | This function manages point machine activation if enabled by the safety function and provides to protection and diagnostic function the voltage and current behaviour during movement and power circuit testing signals. |
| Control Functions | This function acquires switch point machine position. |
| Safety Functions | This function contains the voting principles of the 2002 elaboration channels and the mechanism of negation and recovery in the safe state. |

**Under the command functions the following abive described functions are provided:**

| **Sub-functions** | **Operation** |
|---|---|
| Power Switch | Power is switched to normal or reversal (N or R) output. |
| Power Generation | 145Vdc generation |
| Movement management | Manage start and stop movement |

**Under the control function the following sub-functions are provided:**

| **Sub-functions** | **Operation** |
|---|---|
| Signal Generation ChA | ChA generates a control signal compliant to ChA law modulation |
| Signal Transmission ChA | ChA transmits on control field cable N and R the control signal. |
| Signal Acquisition ChA | Field signals received and transmitted are acquired by Ch A |
| Signal Acquisition ChB | Field signals received and transmitted are acquired by ChB |
| Decoding ChA | This function extracts from received signal: frequency, mean value and rms value and provides data to Safety Function |
| Decoding ChB | This function extracts from received signal: frequency, mean value and rms value and provides data to Safety Function |
| Normal Position Signal Conditioning | This function rectifies positively the signal transmitted on Normal Position if the frequency is centred to 400Hz |
| Reversal Position Signal Conditioning | This function rectifies positively the signal transmitted on Reversal Position if the frequency is centred to 600Hz |

Fruther functions may be provided as for example Protection Functions for managing current and thermal protection and diagnostic functions for acquiring movement, control position status and last movement behavior.

As a further safety feature, in case of one channel processor's 510 or 610 failure detection, the control and command logic processing unit 10 acts a permanent negation called Safe State. This is achieved for example by means of a software fuse. In Safe State the VOTER circuit is no more fed by two DATA streams (codeword streams) and therefore disables power generation.

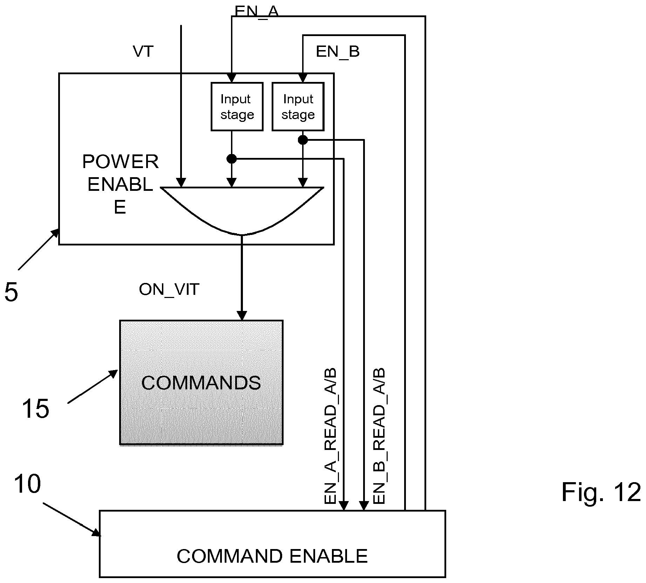

The voting principles are based on codewords which are generated by each processing channel 510, 610 of the command and control logic unit and are fed respectively to the status control managing units 11 and 12. The codewords generated by channels A and B 510 and 610 are complementary and synchronous. The codewords are dynamically generated each cycle during the processing of the command and status signals and the results of the validation tests are used as contributions to the codeword generated. If the data fed to the Voter by one of the status control managing units 11 is complementary to the data fed to the voter by the second status control managing unit 12, the voter circuit generate a continuous activation signal VT which is fed to one input port of a vital AND unit 5. (Fig. 12) The command signals EN_A and EN_B generated by the two processing channels A and B of the command and control logic processing unit 10 are also fed to an input of the vital AND 5 and a vital signal enabling the power stage is generated by the vital AND as long as the three signals VT, EN_A and EN_B are fed to the vital AND unit 5. Furthermore the Vital AND unit 5 inputs for the signal EN-A and EN-B are connected to the processing channels 510 and 610 of the control and command logic processing unit 10 by a feedback line in order to have a further check on the correctness of the signals at the inputs of the vital AND.

## Claims

1. A switch point machine management unit comprising
a control and command logical unit (10) receiving movement commands generated by an interlocking system (2), said control and command logical unit (10) executing a control and command program; said control and command logical unit (10) having two processing channels (510, 610), each one of said channels provided with an independent central processing unit and each one of said processing channels adapted to execute independently from the other and in parallel to the other the control and command logic program and to generate independently from the other command signals (EN_A, EN_B) for enabling the driving of the switch point machine for displacing the points from the normal to the reversal position or viceversa;
a position control unit of the switch point machine for generating switch point machine status signals (RX_A_N, RX_A_R, RX_B_N, RX_B_R) at least relatively to the starting position (N, R) of the points and a signal comparing unit (5) for generating an activation signal as a result of the comparison between command signals and status signals for enabling the driving of the switch point according to the command signals depending on the result of the said comparison
**characterised in that**
the signal comparing unit (5) is connected through a voter unit (14) to status control management units, each one consisting in an independent processing unit (11, 12) each one communicating with respectively only one of the processing channels (510, 610) of the control and command logical unit (10), and each one for carrying out in parallel and independently from the other a comparison between command signals and status signals, the output of each of said two further processing units being fed to the voter unit (14) for generation of an activation signal (ON_VIT),
said position control unit comprising:
a control switch (CT) for opening/closing a normal position control line (CTRL_N; CTRL_R) of the points or a control switch for opening/closing a reverse position control line of the points;
each control line connecting a status control signal generator (510; 11) of the control and command logical unit (10) with a status control position module (4) comprising a signal modulator (40, 41) of the status control signal (TX_A; TX_N, TX_R) which is adapted to be switched to operate a status control signal modulation according to two different modulation laws each one of the two different modulation laws being univocally correlated to one end position of the points;
the switching being caused by the points position control contacts of the switch point machine assuming different commutation conditions related to the normal or reversal end position of the points;
detection means (17, 18) of the modulated status control signal and demodulation means of the modulated status control signal for extracting certain status control signal parameters.

2. A switch point machine management unit according to claim 1 in which the fail safe vital function is carried out by a vital AND unit (5), said vital AND unit (5) having three inputs one of which is connected to the output of the voter (14) and the other two being connected each one to respectively one of the processing channels (510, 610) of the control and command logical unit (10), said vital AND unit (5) generating a switch machine driving signal only when the command and control signals generated independently by each one the two processing channels (510, 610) of the control and command logical unit (10) and the activation signal generated by the Voter (14) are present at the same time at the inputs of said vital AND unit (5) .

3. A switch point machine management unit according to claim 1 in which a feedback line is provided between the vital AND unit (5) inputs for the command signals (EN_A and EN_B) and the processing channels (510, 610) of the command and control logic unit (10) for certifying the correctness of the processing step and enabling the generation of the activation signal by the voter unit (14) .

4. A switch point machine management unit according to one or more of the preceding claims in which codewords (CW) are generated and sent by the processing channels (510, 610) of the command and control logic unit (10) to the status control managing unit, said codewords being modified by said status control managing units (11, 12) as a function of the results of the control status validation process and said modified codewords being fed to the voter unit (14) for carrying out the comparison and determining the generation or not of the activation signal to be fed to the vital AND (5).

5. A switch point machine management unit according to claim 1 in which
the status control signal generator (10, 510, 11) is a signal modulator generating a modulated signal according to a FSK modulation law;
the status control signal (TX_A; TX_N, TX_R) being a positive sine wave signal whose frequency is shifted every predetermined time period from a first frequency to a second frequency and being transmitted is transmitted as a zero mean value signal to the control position module (4);
the status signal modulator in the control position module (4) being a filter band pass (40) with a frequency band compatible with the frequency of the said first and second frequencies which enables a control signal rectifier diode (41) connected in series to the respective control line (CTRL-N, CTRL-R) and to the said band pass filter (40) only if the band pass filter frequency band is compatible with the control signal frequency;
a status control signal (TX_N, TX_R) for the normal position and for the reverse position control being generated, said status control signals for the control of the normal and the reverse position being differently modulated being the first and second frequencies of the FSK modulation different for the two status control signals;
two different band pass filter (40) with a corresponding rectifier diode (41) connected in series to it being provided in the control position module each band pass filter being tuned respectively to the frequency of the control position signal for the normal position and to the frequency of the control position signal for the reverse position and being alternatively connected to the control lines for the corresponding normal or reverse position by the control contacts (cnn, cnr) of the switch machine;
the transmitted control position signal being submitted to rectification only if the frequency of the said control signal is compatible with the frequency band of the band pass filter respectively connected to the control line by the control contacts of the switch machine.

6. A method for carrying, in a switch point machine management unit according to any of Claims 1 to 5, out a position control of the position status of points of a railway or tramway switch, said method comprising the following steps:
Generating a status control signal for the status control of each of the end positions, normal or reverse, of the points;
Providing the switch machine with position control contacts which are commutated in different contact positions depending on the end position , normal or reverse, of the points and inserting in a control signal transmission line processing means adapted to be alternatively enabled to carry out a signal modulation or a signal conditioning only for a status control signal generated for the position control of one of the two end positions of the points and which are enabled to carry out a signal modulation or a signal conditioning for a control signal generated for the position control of the end position not reached by the points;
Detecting the control signal after modulation or conditioning and extracting from said control signal information about the execution or non execution of the modulation or conditioning.

7. A method according to claim 6 in which
the two status control signals are frequency modulated signals according to a FSK modulation law having different frequencies for the status control of the normal and of the reverse position;
the control signals modulation or conditioning is a rectifying process which is enabled by a band pass filter centered alternatively to the frequency of one or of the other of the two status control signals depending on which of the two end positions is under control and the position under control being determined by the control contacts of the switch machine whose commutation status corresponds to the two end positions, by connecting the status control signal to one of two band pass filters each one tuned to the frequency of respectively one of the two control signals.

## Patentansprüche

1. Weichenmaschinenverwaltungseinheit umfassend
eine Steuer- und Befehlslogikeinheit (10), die von einem Verriegelungssystem (2) erzeugte Bewegungsbefehle empfängt, wobei die Steuer-und Befehlslogikeinheit (10) ein Steuer- und Befehlsprogramm ausführt;
wobei die Steuer- und Befehlslogikeinheit (10) zwei Verarbeitungskanäle (510, 610) aufweist, wobei jeder der Kanäle mit einer unabhängigen zentralen Verarbeitungseinheit versehen ist und jeder der Verarbeitungskanäle dafür ausgelegt ist, unabhängig voneinander und parallel zueinander das Steuer- und Befehlslogikprogramm auszuführen und unabhängig voneinander Befehlssignalen (EN_A, EN_B) zu erzeugen, um den Antrieb der Weichenstellmaschine zum Verschieben der Weichen von der normalen in die Umkehrposition oder umgekehrt freizugeben;
eine Positionssteuereinheit der Weichenmaschine zur Erzeugung von Weichenmaschinenstatussignalen (RX_A_N, RX_ A_R, RX_B_N, RX_B_R) zumindest relativ zur Ausgangsposition (N, R) der Weichen und eine Signalvergleichseinheit (5) zur Erzeugung eines Aktivierungssignals infolge des Vergleichs zwischen Befehlssignalen und Statussignalen zur Freigabe der Ansteuerung der Weiche gemäß den Befehlssignalen in Abhängigkeit von dem Ergebnis des Vergleichs
**dadurch gekennzeichnet, dass**
die Signalvergleichseinheit (5) ist über eine Voter-Einheit (14) mit Zustandssteuerungsverwaltungseinheiten verbunden, die jeweils aus einer eigenständigen Verarbeitungseinheit (11, 12) bestehen, die jeweils mit jeweils nur einem der Verarbeitungskanäle (510 610) der Steuer- und Befehlslogikeinheit (10) kommunizieren und jeweils unabhängig voneinander und parallel ein Vergleich zwischen Befehlssignalen und Statussignalen ausführen, wobei die Ausgabe jeder der beiden weiteren Verarbeitungseinheiten der Voter-Einheit (14) zur Erzeugung eines Aktivierungssignals (ON_VIT) zugeführt wird,
wobei die Positionssteuereinheit umfasst:
einen Steuerschalter (CT) zum Öffhen/Schließen einer Normalpositionssteuerleitung (CTRL_N; CTRL_R) der Weiche oder einen Steuerschalter zum Öffnen/Schließen einer Rückwärtspositions-Steuerleitung der Weiche;
jede Steuerleitung, die einen Statussteuersignalgenerator (510; 11) der Steuer- und Befehlslogikeinheit (10) mit einem Statussteuerpositionsmodul (4) mit einem Signalmodulator (40, 41) des Statussteuersignals (TX_A; TX_N, TX_R) verbindet und dazu eingerichtet ist, eine Statussteuersignalmodulation gemäß zwei unterschiedlichen Modulationsgesetzen zu betreiben, wobei jedes der zwei unterschiedlichen Modulationsgesetze eindeutig mit einer Endposition der Weichen korreliert ist;
wobei das Umschalten durch die Weichenstellungssteuerkontakte der Weichenstellmaschine bewirkt wird, die unterschiedliche Schaltbedingungen in Bezug auf die Normal- oder Umkehrendlage der Weiche einnehmen;
Detektionsmittel (17, 18) des modulierten Statussteuersignals und Demodulationsmittel des modulierten Statussteuersignals um bestimmte Statussteuersignalparameter abzuleiten.

2. Weichenmaschinenverwaltungseinheit nach Anspruch 1, bei der die ausfallsichere Vitalfunktion von einer vitalen UND-Einheit (5) ausgeführt wird, wobei die vitale UND-Einheit (5) drei Eingängen aufweist, von denen einer mit dem Ausgang des Voters (14) und die anderen zwei mit jeweils einem der Verarbeitungskanäle (510, 610) der Steuer- und Befehlslogikeinheit (10) verbunden sind, wobei die vitale UND-Einheit (5) nur dann ein Weichenmaschinenantriebssignal erzeugt, wenn die von jedem der beiden Verarbeitungskanäle (510, 610) der Steuer- und Befehlslogikeinheit (10) unabhängig erzeugte Steuer- und Befehlssignale und das von dem Voter (14) erzeugte Aktivierungssignal gleichzeitig an den Eingängen der vitalen UND-Einheit (5) anliegen.

3. Weichenmaschinenverwaltungseinheit nach Anspruch 1, bei der zwischen den vitalen UND-Einheitseingängen (5) für die Befehlssignale (EN A und EN_B) und den Verarbeitungskanälen (510, 610) der Befehls- und Steuerlogik (10) eine Rückkopplungsleitung vorgesehen ist zur Zertifizierung der Korrektheit des Verarbeitungsschritts und Freigeben der Erzeugung des Aktivierungssignals durch die Voter-Einheit (14).

4. Weichenmaschinenverwaltungseinheit nach einem oder mehreren der vorhergehenden Ansprüche, bei der Passwörter (CW) von den Verarbeitungskanälen (510, 610) der Befehls- und Steuerlogik (10) erzeugt und an die Statussteuerungsverwaltungseinheit gesendet werden, wobei die Passwörter durch die Statussteuerungsverwaltungseinheiten (11, 12) in Abhängigkeit von den Ergebnissen des Kontrollstatus-Validierungsprozesses modifiziert werden und die modifizierten Passwörter der Voter-Einheit (14) zugeführt werden, um den Vergleich und die Bestimmung der Erzeugung oder Nichterzeugung des dem vitalen UND (5) zuzuführenden Aktivierungssignals durchzuführen.

5. Weichenmaschinenverwaltungseinheit nach Anspruch 1, wobei der Statussteuersignalgenerator (10, 510, 11) ein Signalmodulator ist, der ein moduliertes Signal nach einem FSK-Modulationsgesetz erzeugt;
das Statussteuersignal (TX_A; TX_N, TX_R) ein positives Sinuswellensignal ist, dessen Frequenz jedes vorbestimmte Zeitintervall von einer ersten Frequenz auf eine zweite Frequenz verschoben wird und als Nullmittelwertsignal an das Steuerpositionsmodul (4) übertragen wird;
der Statussignalmodulator im Steuerpositionsmodul (4) ein Filterbandpass (40) ist mit einem mit der Frequenz der besagten ersten und zweiten Frequenz kompatiblen Frequenzband, das eine Steuersignalgleichrichterdiode (41) freigibt, die mit der jeweiligen Steuerleitung (CTRL-N, CTRL-R) und mit dem Bandpassfilter (40) nur dann in Reihe geschaltet ist, wenn das Bandpassfilter-Frequenzband mit der Steuersignalfrequenz kompatibel ist;
ein Statussteuersignal (TX_N, TX_R) für die Normalposition und für die Rückwärtspositionssteuerung erzeugt wird, wobei die Statussteuersignale zur Steuerung der Normal- und der Rückwärtsposition unterschiedlich moduliert sind, wobei die erste und zweite Frequenz der FSK-Modulation für die beiden Zustandssteuersignale unterschiedlich sind;
in dem Steuerstellungsmodul zwei unterschiedliche Bandpassfilter (40) mit einer dazu in Reihe geschalteten entsprechenden Gleichrichterdiode (41) vorgesehen, wobei jeder Bandpassfilter jeweils auf die Frequenz des Steuerpositionssignals für die Normalposition und auf die Frequenz des Steuerpositionssignals für die Rückwärtsposition abgestimmt ist und mit den Steuerleitungen wechselweise für die entsprechende Normal- bzw. Rückwärtsposition durch die Steuerkontakte (Cnn, Cnr) der Weichenmaschine verbunden ist;
wobei das übertragene Steuerpositionssignal nur dann einer Gleichrichtung zugeführt wird, wenn die Frequenz des genannten Steuersignals mit dem Frequenzband des jeweils mit der Steuerleitung durch die Steuerkontakte der Weichenstellmaschine verbundenen Bandpassfilters kompatibel ist.

6. Verfahren zur Durchführung, in einer Weichenmaschinenverwaltungseinheit nach einem der Ansprüche 1 bis 5, einer Positionssteuerung des Positionszustands von Weichenzungen einer Eisenbahn- oder Strassenbahnweiche, wobei das Verfahren die folgenden Schritte umfasst:
Erzeugen eines Statussteuersignals zur Zustandssteuerung jeder der Endpositionen, normal oder rückwärts, der Weiche;
Bereitstellen der Weichenmaschine mit Positionssteuerkontakten, die in Abhängigkeit von der Endposition, normal oder rückwärts, der Weiche in unterschiedlichen Kontaktpositionen geschaltet werden, und Einfügen in einer Steuersignal-Übertragungsleitung Verarbeitungsmittel, die alternativ dazu eingerichtet sind, wahlweise eine Signalmodulation oder eine Signalaufbereitung nur für ein für die Positionssteuerung einer der beiden Endpositionen der Weiche erzeugtes Statussteuersignal durchzuführen, und die in der Lage sind, eine Signalmodulation oder eine Signalaufbereitung für ein Steuersignal, das für die Positionssteuerung der von der Weiche nicht erreichten Endposition erzeugt wird;
Erfassen des Steuersignals nach einer Modulation oder Aufbereitung und Entnehmen aus der Steuersignalinformation die Ausführung oder Nichtausführung der Modulation oder Aufbereitung.

7. Verfahren nach Anspruch 6, bei dem die beiden Zustandssteuersignale frequenzmodulierte Signale nach einem FSK-Modulationsgesetz mit unterschiedlichen Frequenzen für die Zustandssteuerung der Normal- und der Rückwärtsposition sind; wobei die Steuersignalen-Modulation bzw. -Konditionierung ein gleichrichtenden Prozess ist, der durch einen Bandpassfilter ermöglicht wird, der alternativ zur Frequenz eines oder des anderen der beiden Zustandssteuersignale zentriert ist, je nachdem, welche der beiden Endpositionen gesteuert wird und die Position unter Steuerung durch die Steuerkontakte der Weichenstellmaschine bestimmt wird, deren Schaltzustand den beiden Endpositionen entspricht, durch Verbinden des Statussteuersignals mit einem von zwei Bandpassfiltern, die jeweils auf die Frequenz eines der beiden Steuersignale abgestimmt sind.

## Revendications

1. Une unité de gestion de moteur d'aiguillage comprenant
une unité logique de commande et de contrôle (10) recevant des commandes de mouvement générés par un système d'enclenchement (2), ladite unité logique de commande et de contrôle (10) exécutant un programme de commande et de contrôle;
ladite unité logique de commande et de contrôle (10) ayant deux canaux de traitement (510, 610), chacun desdits canaux étant muni d'une unité centrale de traitement indépendante et chacun desdits canaux de traitement étant adapté pour exécuter indépendamment de l'autre et parallèlement à l'autre le programme logique de commande et de contrôle et pour générer indépendamment de l'autre des signaux de commande (EN_A, EN_B) pour permettre l'actionnement du moteur d'aiguillage pour déplacer les aiguilles depuis la position normale à la position inverse et vice versa;
une unité de contrôle de position du moteur d'aiguillage pour générer des signaux d'état du moteur d'aiguillage (RX_A_N, RX_A_R, RX_B_N, RX_B_R) au moins relativement à la position de départ (N, R) des aiguilles et une unité de comparaison de signaux (5) pour générer un signal d'activation en conséquence de la comparaison entre signaux de commande et signaux d'état pour permettre l'actionnement de l'aiguille selon les signaux de commande en fonction du résultat de ladite comparaison
**caractérisée en ce que**
l'unité de comparaison de signaux (5) est connectée par l'intermédiaire d'une unité de vote (14) à des unités de gestion de contrôle d'état, chacune consistant en une
unité de traitement indépendante (11, 12) communiquant chacune avec respectivement un seul des canaux de traitement (510, 610) de l'unité logique de commande et de contrôle (10), et chacune pour effectuer en parallèle et indépendamment de l'autre une comparaison entre signaux de commande et signaux d'état, la sortie de chacune desdites deux autres unités de traitement étant amenée à l'unité de vote (14) pour générer un signal d'activation (ON_VIT),
ladite unité de contrôle de position comprenant:
un interrupteur de contrôle (CT) pour ouvrir/fermer une ligne de contrôle de position normale (CTRL_N; CTRL_R) des aiguilles ou un interrupteur de contrôle pour ouvrir/fermer une ligne de contrôle de position inverse des aiguilles;
chaque ligne de contrôle connectant un générateur de signaux de contrôle d'état (510; 11) de l'unité logique de commande et de contrôle (10) avec un module de position de contrôle d'état (4) comprenant un modulateur de signaux (40, 41) du signal de contrôle d'état (TX_A; TX_N, TX_R) qui est adapté pour la commutation en vue de commander une modulation du signal de contrôle d'état selon deux lois différentes de modulation, chacune des deux lois de modulation étant reliée univoquement à une position finale des aiguilles;
la commutation étant provoquée par les contacts de contrôle de position des aiguilles du moteur d'aiguillage qui assument des conditions de commutation différentes par rapport à la position finale normale ou inversée des aiguilles;
des moyens de détection (17, 18) du signal de contrôle d'état modulé et des moyens de démodulation du signal de contrôle d'état modulé pour extraire certains paramètres du signal de contrôle d'état.

2. Une unité de gestion de moteur d'aiguillage selon la revendication 1 dans laquelle la fonction vitale à sécurité intégrée est réalisée par une unité vitale ET (5), ladite unité vitale ET (5) ayant trois entrées dont une est connectée à la sortie du voteur (14) et les deux autres étant chacune connectée respectivement à un des canaux de traitement (510, 610) de l'unité logique de commande et de contrôle (10), ladite unité vitale ET (5) produisant un signal d'actionnement pour machine de commutation seulement lorsque les signaux de commande et de contrôle produits indépendamment par chacun des deux canaux de traitement (510, 610) de l'unité logique de commande et de contrôle (10) et le signal d'activation généré par le voteur (14) sont présents simultanément aux entrées de ladite unité vitale ET (5) .

3. Une unité de gestion de moteur d'aiguillage selon la revendication 1, dans laquelle est prévue une ligne de rétroaction entre les entrées de l'unité vitale ET (5) pour les signaux de commande (EN_A et EN_B) et les canaux de traitement (510, 610) de l'unité logique de commande et de contrôle (10) pour certifier l'exactitude de l'étape de traitement et permettre la génération du signal d'activation par l'unité de vote (14).

4. Une unité de gestion de moteur d'aiguillage selon une ou plusieurs des revendications précédentes dans laquelle des mots de code (CW) sont générés et envoyés par les canaux de traitement (510, 610) de l'unité logique de commande et de contrôle (10) à l'unité de gestion de contrôle d'état, lesdits mots de code étant modifiés par lesdites unités de gestion de contrôle d'état (11, 12) en fonction des résultats du procédé de validation de contrôle d'état et lesdits mots de code modifiés étant envoyés à l'unité de vote (14) pour effectuer la comparaison et déterminer la génération ou non du signal d'activation qui doit être amené au vitale ET (5).

5. Une unité de gestion de moteur d'aiguillage selon la revendication 1, dans laquelle
le générateur de signal de contrôle d'état (10, 510, 11) est un modulateur de signal générant un signal modulé selon une loi de modulation FSK;
le signal de contrôle d'état (TX_A; TX_N, TX_R) étant un signal sinusoïdal positif dont la fréquence est déplacée chaque période de temps prédéterminée d'une première fréquence à une seconde fréquence et étant transmis, est transmis sous forme d'un signal de valeur moyenne zéro au module de position de contrôle (4);
le modulateur de signal d'état dans le module de position de contrôle (4) étant un filtre passe-bande (40) avec une bande de fréquence compatible avec la fréquence desdites première et seconde fréquences qui habilite une diode de redressement de signal de contrôle (41) connectée en série à la respective ligne de contrôle (CTRL-N, CTRL-R) et audit filtre passe-bande (40) uniquement si la bande de fréquence du filtre passe-bande est compatible avec la fréquence du signal de contrôle;
un signal de contrôle d'état (TX_N, TX_R) pour la de position normale et pour la position inverse étant généré, lesdits signaux de contrôle d'état pour contrôler la position normale et la position inverse étant modulés différemment, les première et seconde fréquences de la modulation FSK étant différentes pour les deux signaux de contrôle d'état;
deux filtres passe-bande différents (40), avec une diode de redressement correspondante (41) qui leur est connectée en série, étant prévus dans le module de position de contrôle, chaque filtre passe-bande étant réglé respectivement sur la fréquence du signal de position de contrôle pour la position normale et sur la fréquence du signal de position de contrôle pour la position inverse et étant connecté alternativement aux lignes de contrôle pour la position normale ou inverse correspondante par les contacts de contrôle (cnn, cnr) du moteur l'aiguillage;
le signal de position de commande transmis n'est soumis à rectification que si la fréquence dudit signal de contrôle est compatible avec la bande de fréquences du filtre passe-bande connecté respectivement à la ligne de contrôle par les contacts de contrôle du moteur d'aiguille.

6. Un procédé pour réaliser, dans une unité de gestion de moteur d'aiguillage selon quelconque des revendications 1 à 5, un contrôle de position de l'état de position des aiguillages d'un aiguillage ferroviaire ou de tramway, ledit procédé comprenant les étapes suivantes:
Générer un signal de contrôle d'état pour le contrôle d'état de chacune des positions finales, normales ou inverses, des aiguilles;
Munir le moteur d'aiguille de contacts de commande de position, qui sont commutés dans différentes positions de contact en fonction de la position finale, normale ou inverse, des aiguilles et insérer dans une ligne de transmission de signaux de contrôle des moyens de traitement adaptés pour être habilités alternativement pour effectuer une modulation de signal ou un conditionnement de signal uniquement pour un signal de contrôle d'état généré pour le contrôle de position d'une des deux positions finales des aiguilles et qui sont habilités pour effectuer une modulation de signal ou un conditionnement de signal pour un signal de contrôle généré pour le contrôle de position finale non atteinte par les aiguilles;
Détecter le signal de contrôle après modulation ou conditionnement et extraire dudit signal de contrôle les informations sur l'exécution ou la non-exécution de la modulation ou du conditionnement.

7. Un procédé selon la revendication 6 dans lequel
les deux signaux de contrôle d'état sont des signaux modulés en fréquence selon une loi de modulation FSK ayant des fréquences différentes pour le contrôle d'état de la position normale et de la position inverse;
la modulation ou le conditionnement des signaux de contrôle est un traitement de redressement qui est habilité par un filtre passe-bande centré alternativement à la fréquence de l'un ou de l'autre des deux signaux de contrôle d'état selon laquelle des deux positions finales est sous contrôle et la position sous contrôle étant déterminée par les contacts de contrôle du moteur d'aiguille dont l'état de commutation correspond aux deux positions finales, en connectant le signal de contrôle d'état à un des deux filtres passe-bande chacun réglé à la fréquence d'un signal respectif des deux signaux de contrôle.
